# EUROPÄISCHE PATENTANMELDUNG

(11) **EP 2 591 872 A1**
(43) Veröffentlichungstag der Anmeldung: **15.05.2013**
(21) Anmeldenummer: 11188750.1
(22) Anmeldetag: 11.11.2011
(51) Int. Cl.: B23K 1/005, B23K 26/34, F01D 5/00

(54) **Umschmelzverfahren und anschließendes Auffüllen und Bauteil**

(71) Anmelder: Siemens Aktiengesellschaft, 80333 München (DE)
(72) Erfinder: Ott, Michael, 45470 Mülheim an der Ruhr (DE); Piegert, Sebastian, 10777 Berlin (DE); Reinkensmeier, Ingo, 58730 Fröndenberg (DE)

(57) **Zusammenfassung**

Die Erfindung betrifft ein Verfahren zum Umschmelzen und Auffüllen eines Defekts (7) einer Oberfläche (19) eines Substrats (4), bei dem der Defekt (7) umgeschmolzen wird und wobei eine Mulde (28) entsteht und wobei die entstandene Mulde (28) aufgefüllt wird, sowie ein Bauteil mit einem umgeschmolzenen Bereich (25) und einem Lotbereich (31) darüber. Insbesondere wird ein nickel- oder kobaltbasiertes Substrat (4) durch ein Laserumschmelzverfahren umgeschmolzen, und danach die entstandene Mulde (28) durch ein Laserauftragsverfahren, insbesondere durch Löten, aufgefüllt.

## Beschreibung

Die Erfindung betrifft ein Umschmelzverfahren, das Verunreinigungen von der umzuschmelzenden Zone entfernt und ein anschließendes Auffüllen sowie ein Bauteil.

Hochtemperaturbauteile wie z.B. Turbinenschaufeln, die lange im Einsatz waren, weisen manchmal Risse auf, die bis in das Substrat durch die Schichten hindurchgehen und dort oxidieren.

Für die Wiederverwendung der Turbinenschaufeln müssen die Risse wieder gefüllt werden.

Vorab werden die Oxide aber entfernt, da sonst keine Benetzung mit dem Schweißmaterial stattfinden kann. Daher erfolgt vor dem Schweißen in einem separaten Prozess eine Reinigung mit Flouridgas (FIC-Reinigung).

Dies stellt einen separaten Verfahrensschritt dar und ist daher zeitaufwändig.

Es ist daher Aufgabe der Erfindung oben genanntes Problem zu lösen.

Die Aufgabe wird gelöst durch ein Verfahren gemäß Anspruch 1 und ein Bauteil gemäß Anspruch 11.

In den Unteransprüchen sind weitere vorteilhafte Maßnahmen aufgelistet, die beliebig miteinander kombiniert werden können, um weitere Vorteile zu erzielen.

Es zeigen:
- Figuren 1 - 4: schematisch eine Vorrichtung, mit der das Verfahren durchgeführt werden kann,
- Figur 5: eine Turbinenschaufel und
- Figur 6: eine Liste von Superlegierungen.

Die Beschreibung und die Figuren stellen nur Ausführungsbeispiele der Erfindung dar.

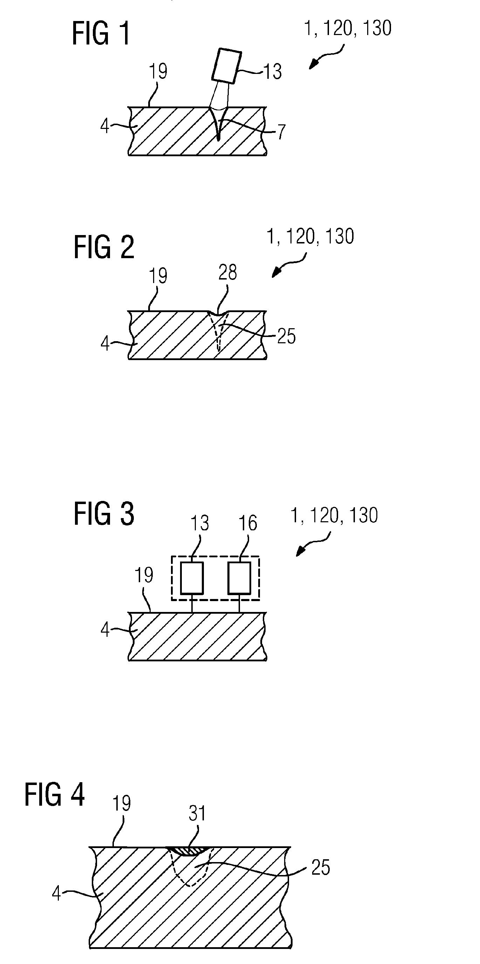

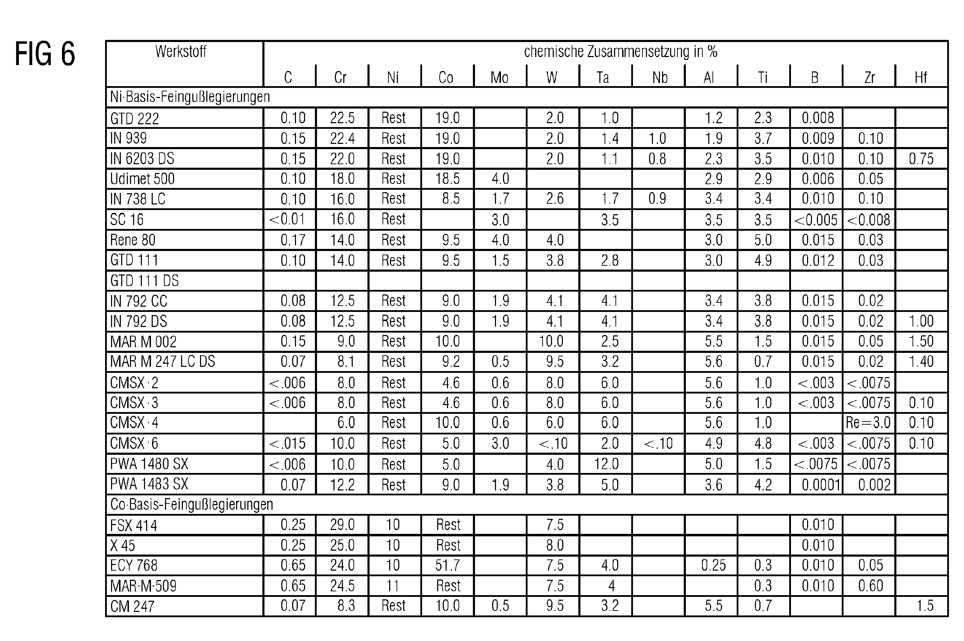

Figur 1 zeigt ein Bauteil 1, 120, 130 mit einem Substrat 4. Das Substrat 4 ist insbesondere nickel- oder kobaltbasiert und weist ganz insbesondere eine Legierung gemäß Figur 6 auf. Das Substrat 4 weist einen Riss 7 (Defekt) auf, in dem Oxide vorhanden sind (Oxide nicht dargestellt).
Dieser Riss 7 soll nun repariert, d.h. gefüllt oder geschlossen werden.

Dazu wird in einem ersten Schritt mittels eines Schweißgeräts, insbesondere eines Lasers 13 und eines Laserstrahls anhand dessen die Erfindung beispielhaft erläutert wird, das Substrat 4 im Bereich des Risses 7 umgeschmolzen (d.h. ohne Materialzufuhr).
Vorzugsweise verfährt der Laser 13 dabei entlang des Risses 7 (hier senkrecht zur Zeichnungsebene) .

Vorzugsweise umhüllt eine Schutzgasdüse den Laserstrahl um Sauerstoffzutritt (< 150 ppm Sauerstoff) zum Schmelzbad zu unterbinden.

Durch den Umschmelzprozess entsteht oft eine Mulde 28 im Bereich der Oberfläche 19 des Substrats 4, wie es in Figur 2 dargestellt ist. Unter der Mulde 28 ist ein Umschmelzbereich 25 entstanden.

In einem zweiten Schritt wird dann die Mulde 28 mit Material aufgefüllt und ergibt einen Auffüllbereich 31.

Dies kann durch bekannte Löt- oder Schweißprozesse erfolgen.

Ebenso kann das Auffüllen, wie in Figur 3 dargestellt, insitu erfolgen, indem ein zweites Gerät, insbesondere ein zweites Schweißgerät, ganz insbesondere durch einen zweiten Laser 16, bei dem zusätzlich Material an der Oberfläche aufgebracht wird, es ermöglicht, dass die Mulde 28, die durch das Umschmelzen durch das Schweißgerät 13 entstand, direkt anschließend - solange das Substrat 4 an dieser Stelle noch heiß oder angeschmolzen ist - durch ein Auftragsverfahren, insbesondere durch Auftragen eines Lötverfahrens, aufgefüllt wird. Der Auffüllbereich 31 ist deutlich kleiner als der Umschmelzbereich 25.

So wird sehr schnell ein Riss 7 verschlossen, ohne dass vorab eine aufwändige und zeitintensive Oxidreduktion des Defekts 7 stattfinden muss.

Als Material, das die Mulde 28 auffüllt, kann ein Lotmaterial, insbesondere eine Mischung aus dem Basismaterial (GW) des Substrats 4 und einem Lotmaterial (geringere Schmelztemperatur, mindestens 10K) als Material des Substrats 4 oder ein reines Lotmaterial (geringere Schmelztemperatur als GW, mindestens 10K) verwendet werden.

Das hier vorgeschlagene Verfahren kombiniert zwei bereits bekannte Verfahren in neuartiger Weise. Mit einem ersten Laser 13 wird der Riss 7 umgeschmolzen, ohne Pulverzusatz und ohne vorherige gaschemische Reinigung von Oxiden. Dadurch wird der Riss 7 verschlossen und das im Riss befindliche Oxid wird auf die Oberfläche geschwemmt.

Vorzugsweise ein zweiter Laser 16 folgt dem ersten Laser 13 nachlaufend. In den zweiten Laser 16 wird entweder reines Hochtemperaturlot oder aber eine beliebige Mixtur aus Hochtemperaturlot (Differenz Schmelztemperatur ≥ 10K) und Grundwerkstoffpulver durch eine um den Laserstahl befindliche Düse eingebracht.

Der Energieeintrag des Lasers ist dabei vorzugsweise gewählt, dass ein Anschmelzen der Bauteiloberfläche des Umschmelzbereichs 25 gewährleistet ist. Dieser Anschmelzbereich ist aber deutlich kleiner als der Umschmelzbereich 25 und kleiner als der Auffüllbereich 31. Dadurch wird einerseits das Oxid an den Rand des Schmelzbades geschwemmt, andererseits wird das Pulver deponiert. Dabei wird Lot (oder Lot/GW) aufgebracht, um den Volumenverlust durch das Umschmelzen (Fehlmaterial wg. Oxid!) zu kompensieren, gleichzeitig werden Risse, die durch den Umschmelzprozess entstanden sind, mit dem hochflüssigen Lot verschlossen. So entsteht eine neue homogene Oberfläche.

Der Vorteil liegt im sicheren Verschließen des Hauptrisses. Nebenrisse, die gelegentlich durch den Umschmelzprozess entstehen, werden nachfolgend durch das Lot verschlossen. Die neuen entstandenen Risse sind jedoch per se oxidfrei und außerdem klein, so dass beste Voraussetzungen für eine sichere Lötung gegeben sind.

Ein weiterer Vorteil liegt im deutlich reduzierten Schmelzpunkt des Pulverzusatzes zum Auffüllen. Dadurch kann die Laserleistung (und damit der Energieeintrag in das Substrat => Rissanfälligkeit) so reduziert werden, dass keine neuen Risse im Bauteil mehr auftreten.

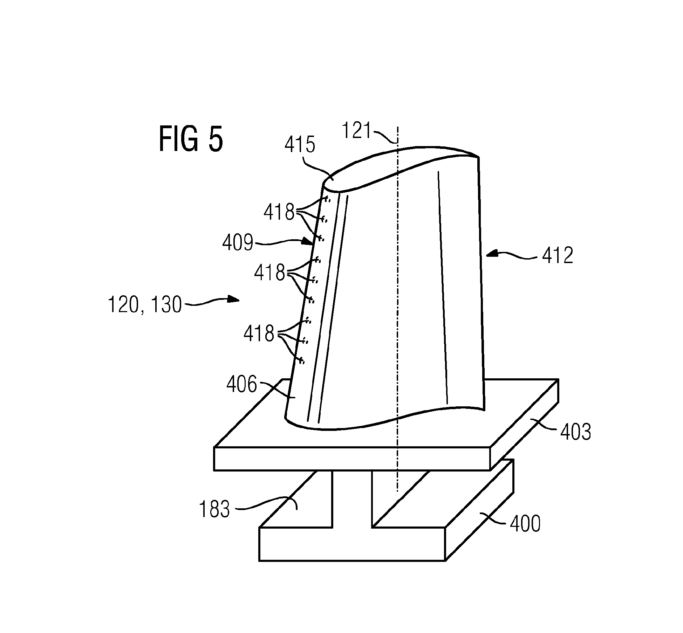

Die Figur 5 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.

Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt.

Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zum Umschmelzen und Auffüllen eines Defekts (7) einer Oberfläche (19) eines Substrats (4),
bei dem der Defekt (7) umgeschmolzen wird und
wobei eine Mulde (28) entsteht und
wobei die entstandene Mulde (28) aufgefüllt wird.

2. Verfahren nach Anspruch 1,
bei dem ein metallisches Substrat (4),
insbesondere ein nickel- oder kobaltbasiertes Substrat (4) umgeschmolzen wird.

3. Verfahren nach einem oder beiden der Ansprüche 1 oder 2,
bei dem ein Laserumschmelzverfahren verwendet wird.

4. Verfahren nach einem oder mehreren der vorherigen Ansprüche 1, 2 oder 3,
bei dem durch ein Auftragsverfahren die entstandene Mulde (28) aufgefüllt wird,
insbesondere durch ein Laserauftragsverfahren.

5. Verfahren nach einem oder mehreren der vorherigen Ansprüche,
bei dem die Auffüllung der Mulde (28) unmittelbar nach dem Umschmelzen des Defekts (7) erfolgt.

6. Verfahren nach einem oder mehreren der vorherigen Ansprüche,
bei dem die Mulde (28) durch ein Löt- oder Schweißprozess mit einem Auffüllbereich (31) aufgefüllt wird, insbesondere durch einen Lötprozess.

7. Verfahren nach einem oder mehreren der vorherigen Ansprüche,
bei dem das Material zur Auffüllung der Mulde (28) ein Material des Substrats (4) aufweist,
insbesondere eine Mischung mit einem Lotmaterial,
das einen niedrigeren Schmelzpunkt (mindestens 10K) als das Material des Substrats (4) aufweist.

8. Verfahren nach einem oder mehreren der vorherigen Ansprüche,
bei dem der Defekt (7) Oxide aufweist,
insbesondere bei dem der Defekt (7) vor dem Umschmelzen keiner Oxidentfernungsbehandlung unterzogen wird.

9. Verfahren nach einem oder mehreren der vorherigen Ansprüche,
bei dem der Auffüllbereich (31) nachbearbeitet wird.

10. Verfahren nach einem oder mehreren der vorherigen Ansprüche,
bei dem Oxide nach dem Umschmelzen entfernt werden.

11. Bauteil mit einem umgeschmolzenen Bereich (25) und einem Lotbereich (31) darüber.
